# EUROPEAN PATENT SPECIFICATION

(11) **EP 1 477 299 B1**
(45) Date of publication and mention of the grant of the patent: **27.06.2007**
(21) Application number: 04076331.0
(22) Date of filing: 03.05.2004
(51) Int. Cl.: B32B 3/12, B32B 27/32, B65D 81/03

(54) **Polypropylene bubble wrap and process for producing the same**
Luftpolsterfolie aus Polypropylen und Verfahren zu deren Herstellung
Film à bulles en polypropylène, ainsi que son procédé de préparation

(30) Priority: 06.05.2003 IT MI20030906
(43) Date of publication of application: 17.11.2004
(73) Proprietor: COLINES S.p.A., 28100 Novara (IT)
(72) Inventor: Lombardini, Francesco, 28060 Nibbia (Novara) (IT)
(74) Representative: Martegani, Franco

(56) References cited:
- EP-A- 0 408 874
- US-A1- 2004 000 581
- PATENT ABSTRACTS OF JAPAN vol. 2000, no. 22, 9 March 2001 (2001-03-09) -& JP 2001 129907 A (IDEMITSU PETROCHEM CO LTD), 15 May 2001 (2001-05-15)
- DATABASE WPI Section Ch, Week 200143 Derwent Publications Ltd., London, GB; Class A17, AN 2001-405327 XP002290441 -& JP 2001 130638 A (IDEMITSU PETROCHEM CO LTD) 15 May 2001 (2001-05-15)

## Description

The present invention relates to a polypropylene air blister film and the process for the preparation of the blister films.

Blister films are products which are generally used for the packaging of fragile articles and/or bulky objects (such as, for example, glass items, furniture, furnishing auxiliaries, various kind of machines) to prevent them from being damaged by accidental impact or more generally for protection during transportation from the production site to the distributor followed by the subsequent passages to the final purchaser.

The existing state of the art describes and uses blister films generally and universally made of LDPE (Low density polyethylene), or mixtures of LDPE or mixtures of LDPE and LLDPE (linear low density polyethylene), or again these blister films are produced by the co-extrusion of multilayers of LDPE with a barrier material such as PA6 (polyamide 6).

In particular, the blister film according to the state of the art is obtained by the formation of a first thermoformed film with cylindrical or conical impressions, more or less large, more or less deep and more or less close to each other.

A second flat closure film is welded onto the first thermoformed film with the above impressions, i.e. the blisters, making the blisters hermetic and creating a "padding" effect, allowing the blister film to exert its function which, as mentioned, is to absorb impact.

The mechanical resistance of the blister film thus produced, obviously directly depends on the quantity of material used and consequently on the weight per square meter of polyethylene film forming the two layers.

The mechanical resistance and shock absorption effect can be further improved by adding a third polyethylene film, by means of a welding process, on the top of the blisters, thus creating a mattress. Also in this case, the end-product will have a more or less high mechanical resistance, in relation to the weight per square meter of film added.

If products with higher mechanical properties, a longer duration with time or a greater air tightness inside the blister, are desired, the state of the art envisages the production and use of films with multilayer structures containing an internal layer of Nylon and outer layers of LDPE, said outer layers forming the welding between the film components.

In general, however, these products made of polyethylene obviously reach a mechanical resistance value which is characterized by the polymer itself. For example, the table indicates the characteristics of a PE relating to: yield stress and yield elongation, ultimate stress and ultimate elongation, ultimate energy absorbed.

| Material | Thickness | Yield | Yield | Ultimate | Ultimate | Energy |
|---|---|---|---|---|---|---|
| | [µm] | stress | elongation | stress | Elongation | [J] |
| | | [N/mm²] | [%] | [N/mm²] | [%] | |
| LDPE | 25 | 10.3 | 10 | 23.6 | 205 | 348 |

The current state of the art therefore offers various types of products, i.e. air blister films, which are all substantially made of LDPE or mixtures of LDPE and LLDPE, which can be easily welded and are therefore easy to produce. Although these products are more or less valid with respect to air tightness, duration with time, etc., they are extremely fragile from a mechanical point of view as can be observed from the yield stress and ultimate stress values indicated above, and they are consequently products which easily tear unless such high basis weights are reached as to compromise the flexibility of the product and at the same time the cost of the raw material is prohibitive.

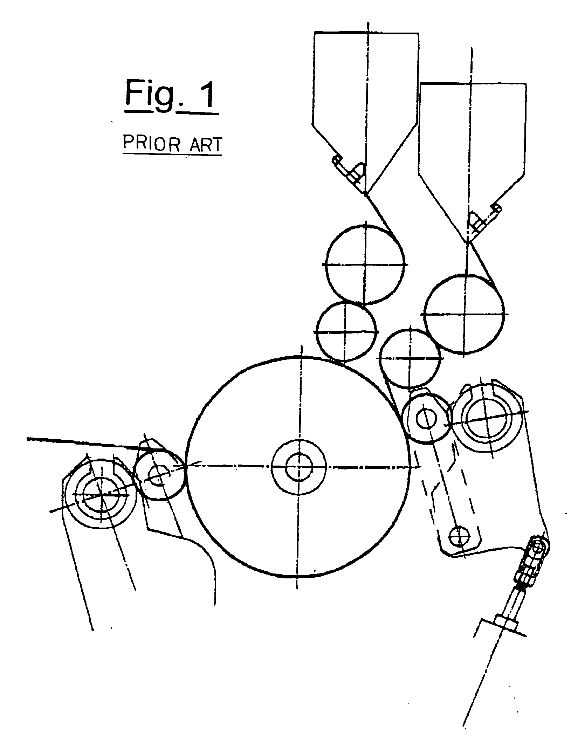

In order to find a solution to this problem, attempts were directed towards a constant evolution in the production techniques of these polyethylene films, a technique which has been constantly improved and adapted to the ever-evolving properties of raw materials, thus allowing high production levels to be reached, using systems such as that indicated in figure 1.

These systems allow the temperatures of the films to be controlled by the removal or addition of heat, with the purpose of obtaining ideal conditions with respect to thermo-formability, stability and welding.

All this can be easily achieved as the raw material used (LDPE) has an extremely wide crystallization range and can therefore be handled with thermo-regulated supporting, stretching and conveying cylinders.

In spite of the optimization of the production techniques, the blister films of the state of the art described above, still have the great disadvantage of a high fragility.

It is consequently impossible, for example, to use the above films for the packaging of particularly bulky and heavy objects, such as furniture. Once packaged, in fact, these objects can no longer be moved due to the lack of grips, as, if moved by gripping the blister film, the latter would easily tear. It is therefore necessary to provide a gripping system for moving the item, with a consequent increase in costs and packaging times.

In order to overcome this drawback, blister films were produced in a different material which would allow a product to be obtained with a much higher mechanical resistance, with the same basis weight, than that of polyethylene. Polypropylene (PP) was therefore used. PP however has a very narrow crystallization range and consequently in the production of air blister films, it is extremely difficult to effect the welding between the thermo-formed film and the closure film. A product is therefore obtained, which does not have a sufficient airtightness. The air blister consequently has an extremely limited duration with time, and is therefore of no interest for the applications considered.

For example, JP-2001-129907 and JP-2001-130638 disclose a foaming buffer material composed of a convex portion forming film having opened convex portions on one side and a seal film pasted with the convex portion forming film so as to block the opening side of the convex portions. In particular both the convex portion forming film and the seal film are a single-layered or multilayered polypropylene resin.

The Applicant has now surprisingly found that the particular polypropylene blister film, according to the present invention, overcomes the disadvantages of the known art.

An object of the present invention therefore relates to a polypropylene blister film which comprises two film components, the first film component being thermoformed with cylindrical or conical impressions, the second film component being flat and closure welded to the first, each of the film components being a multilayer structure, produced by co-extrusion, with at least two layers of polypropylene homo-polymer or copolymer.

In particular, each of the film components is a multilayer structure produced in co-extrusion with three layers, wherein the three-layered co-extruded structure consists of an internal layer of PP homo-polymer and two outer layers made of PP co-polymer.

The three-layered co-extruded structure can have an ABA structure consisting of an internal layer of PP homopolymer (B) and two outer layers of PP co-polymer (A) or it can have an ABC structure consisting of an internal layer of PP homo-polymer (B) and two outer layers of PP co-polymer (A) and (C).

The two layers of polypropylene co-polymer which form the three-layered co-extruded structure, can therefore consist of the same material, or of different materials.

In particular, the polypropylene homo-polymer has a density equal to about 0.90 ÷ 0.91 kg/dm³ and consists of propylene monomers.

The polypropylene co-polymer has a density equal to about 0.90 ÷ 0.91 kg/dm³.

The polypropylene co-polymer is a random or block copolymer consisting of repetitive units of propylene and ethylene and/or polybutene monomers.

It can in fact be a random or block co-polymer indifferently, maintaining however high basic mechanical properties, due to the bond forces present between the structural units (propylene) and between the other monomers (ethylene and/or polybutene).

A further object of the present invention relates to a process for the production of a polypropylene air blister film which comprises the following phases:
a) pouring a first polypropylene film component or thermoforming film directly onto the shaped cylinder under vacuum;
b) thermoforming the thermoforming film with cylindrical or conical impressions;
c) welding a second polypropylene underlying closure film component onto the first one.

The basic advantage of the product according to the present invention consists in the fact that it has a much higher air tightness than the existing polyethylene blister films and consequently has optimal characteristics with respect to both duration with time and mechanical properties, such as mechanical resistance, allowing it to be used for example in the packaging of bulky and heavy objects, with particularly advantageous results compared with polyethylene blister films.

The polypropylene blister film according to the present invention does in fact have much higher yield and ultimate stress values than PE film.

Another object of the present invention relates to the use of polypropylene blister film as a protective element or packaging element.

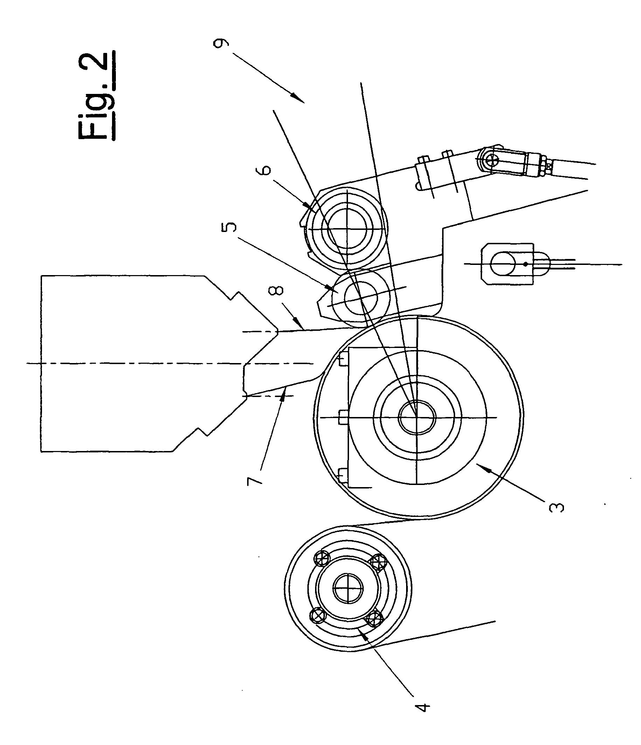

The characteristics and advantages of a process according to the present invention will appear more evident from the following illustrative but non-limiting description, referring to the enclosed schematic drawing (figure 2) which represents a raised side view of a detail of an apparatus for the production of a polypropylene blister film according to the present invention.

A simple comparison between the lay-out of figure 1, which represents the state of the art, and the lay-out embodied in figure 2, which represents the process according to the present invention, demonstrates the main existing differences. The normal technique in fact, which, although it is more complex on a mechanical/productive scale, does not allow a technologically valid product to be obtained with entirely PP material, has been completely changed.

With reference to figure 2, this indicates with 3 the thermoforming cylinder, with 4 the final cooling cylinder, with 5 the welding cylinder, with 6 the contact cooling cylinder, with 7 the thermoforming film, with 8 the underlying closure film and with 9 the variation angle of the welding point effected by the regulation run of the welding group itself.

The process for the production of a polypropylene blister film according to the present invention also envisages that the variation in the welding position of the underlying closure film be related to the operating rate and basis weight of the product.

As the crystallization point of polypropylene is extremely narrow, the coupling of the two films and also the welding must take place with the polymer under ideal thermal conditions. It is therefore necessary to have a low welding point for high rates or large thicknesses of the product and a high welding point for low rates or low thicknesses of the product.

There is also a strict thermal regulation of the forming cylinder. This can in fact be rigorously thermally regulated as each shift from the ideal value can cause a general gluing or lack of welding between the two films.

As previously specified, another important condition for the production process according to the present invention is the direct "pouring" of the thermoforming film onto the shaped cylinder under vacuum, in order to prevent gluing or temperature drops of the molten product on the supplementary passage cylinders.

## Claims

1. Polypropylene air blister film which envisages two film components, the first film component being thermoformed with cylindrical or conical impressions, the second film component being flat and closure welded to the first, each of the film components being a multilayer structure, produced by co-extrusion, wherein
each of the film components is a multilayer structure produced in three-layered co-extrusion, the three-layered co-extruded structure consisting of an internal layer of PP homo-polymer and two outer layers of PP co-polymer.

2. The film according to claim 1, **characterized in that** the three-layered co-extruded structure has an ABA structure consisting of an internal layer of PP homopolymer (B) and two outer layers of PP co-polymer (A).

3. The film according to claim 1, **characterized in that** the three-layered co-extruded structure has an ABC structure consisting of an internal layer of PP homopolymer (B) and two outer layers of PP co-polymer (A) and (C).

4. The film according to any of the previous claims, **characterized in that** the polypropylene homopolymer has a density equal to about 0.90 ÷ 0.91 kg/dm³.

5. The film according to any of the previous claims, **characterized in that** the polypropylene co-polymer has a density equal to about 0.90 ÷ 0.91 kg/dm³.

6. The film according to any of the previous claims, **characterized in that** the polypropylene copolymer is a random or block copolymer consisting of repetitive units of propylene and ethylene and/or polybutene monomers.

7. A process for the production of a polypropylene air blister film, wherein the polypropylene air blister film envisages two film components, the first film component being thermoformed with cylindrical or conical impressions, the second film component being flat and closure welded to the first, each of the film components being a multilayer structure produced in three-layered co-extrusion, the three-layered co-extruded structure consisting of an internal layer of PP homopolymer and two outer layers of PP copolymer according to anyone of claims 1-6, which comprises the following phases:
a) pouring a first polypropylene film component or thermoforming film directly onto the shaped cylinder under vacuum;
b) thermoforming the thermoforming film with cylindrical or conical impressions;
c) welding a second polypropylene underlying closure film component onto the first one.

8. The process according to claim 7, **characterized in that** it envisages the variation in the welding position of the underlying closure film in relation to the operating rate and basis weight (regulation angle), i.e. a low welding point for high rates or large thick-nesses of the product and a high welding point for low rates or low thicknesses of the product.

9. The process according to claim 7 , **characterized in that** the forming cylinder is thermally regulated.

10. Use of the film according to any of the claims 1-6 as a protective element or packaging element.

## Patentansprüche

1. Polypropylen-Luftpolsterfolie, die zwei Folienkomponenten umfasst, wobei die erste Folienkomponente mit zylindrischen oder konischen Vertiefungen thermogeformt ist, die zweite Folienkomponente flach und an die erste verschlussgeschweißt ist, wobei jede der Folienkomponenten eine Mehrschichtstruktur ist, die durch Koextrusion hergestellt ist, wobei jede der Folienkomponenten eine Mehrschichtstruktur ist, die in dreischichtiger Koextrusion hergestellt ist, wobei die dreischichtige koextrudierte Struktur aus einer Innenschicht aus PP-Homopolymer und zwei Außenschichten aus PP-Copolymer besteht.

2. Folie nach Anspruch 1, **dadurch gekennzeichnet, dass** die dreischichtige koextrudierte Struktur eine ABA-Struktur aufweist, die aus einer Innenschicht aus PP-Homopolymer (B) und zwei Außenschichten aus PP-Copolymer (A) besteht.

3. Folie nach Anspruch 1, **dadurch gekennzeichnet, dass** die dreischichtige koextrudierte Struktur eine ABC-Struktur aufweist, die aus einer Innenschicht aus PP-Homopolymer (B) und zwei Außenschichten aus PP-Copolymer (A) und (C) besteht.

4. Folie nach einem der vorhergehenden Ansprüche, **dadurch gekennzeichnet, dass** das Polypropylen-Homopolymer eine Dichte von etwa 0,90 ÷ 0,91 kg/dm³ aufweist.

5. Folie nach einem der vorhergehenden Ansprüche, **dadurch gekennzeichnet, dass** das Polypropylen-Copolymer eine Dichte von etwa 0,90 ÷ 0,91 kg/dm³ aufweist.

6. Folie nach einem der vorhergehenden Ansprüche, **dadurch gekennzeichnet, dass** das Polypropylen-Copolymer ein statistisches oder Blockcopolymer ist, das aus sich wiederholenden Einheiten von Propylen- und Ethylen- und/oder Polybuten-Monomeren besteht.

7. Verfahren zum Herstellen einer Polypropylen-Luftpolsterfolie, wobei die Polypropylen-Luftpolsterfolie zwei Folienkomponenten umfasst, wobei die erste Folienkomponente mit zylindrischen oder konischen Vertiefungen thermogeformt ist und die zweite Folienkomponente flach ist und an die erste verschlussgeschweißt ist, wobei jede der Folienkomponenten eine Mehrschichtstruktur ist, die in dreischichtiger Koextrusion hergestellt ist, wobei die dreischichtige koextrudierte Struktur aus einer Innenschicht aus PP-Homopolymer und zwei Außenschichten aus PP-Copolymer besteht, nach einem der Ansprüche 1 bis 6, das die folgenden Phasen umfasst:
(a) Gießen einer ersten Polypropylen-Folienkomponente oder direktes Thermoformen der Folie auf den Formzylinder unter Vakuum;
(b) Thermoformen der Thermoformungsfolie mit zylindrischen oder konischen Vertiefungen;
(c) Schweißen einer zweiten darunter liegenden Polypropylen-Verschlussfolienkomponente auf die erste.

8. Verfahren nach Anspruch 7, **dadurch gekennzeichnet, dass** es die Veränderung in der Schweißposition der darunter liegenden Verschlussfolie in Relation zu der Betriebsrate und dem Basisgewicht (Regelwinkel) umfasst, d.h. einen niedrigen Schweißpunkt für hohe Raten oder große Dicken des Produkts und einen hohen Schweißpunkt für niedrige Raten oder niedrige Dicken des Produkts.

9. Verfahren nach Anspruch 7, **dadurch gekennzeichnet, dass** der Formungszylinder temperaturgeregelt ist.

10. Verwendung der Folie nach einem der Ansprüche 1 bis 6 als Schutzelement oder Verpackungselement.

## Revendications

1. Film à bulle d'air en poly(propylène) qui prévoit deux composants de film, le premier composant de film étant thermoformé avec des impressions cylindriques ou coniques, le second composant de film étant plat et soudé par fermeture au premier composant de film, chacun des composants de film étant une structure multicouche, produite par coextrusion, dans lequel chacun des composants de film est une structure multicouche produite lors d'une coextrusion tricouche, la structure coextrudée tricouche consistant en une couche interne d'homopolymère de PP et deux couches externes de copolymère de PP.

2. Film selon la revendication 1, **caractérisé en ce que** la structure coextrudée tricouche comporte une structure ABA consistant en une couche interne d'homopolymère de PP (B) et deux couches externes de copolymère de PP (A).

3. Film selon la revendication 1, **caractérisé en ce que** la structure coextrudée tricouche comporte une structure ABC consistant en une couche interne d'homopolymère de PP (B) et deux couches externes de copolymère de PP (A) et (C).

4. Film selon l'une quelconque des revendications précédentes, **caractérisé en ce que** l'homopolymère de poly(propylène) a une masse volumique égale à environ 0,90 ÷ 0,91 kg/dm³.

5. Film selon l'une quelconque des revendications précédentes, **caractérisé en ce que** le copolymère de poly(propylène) a une masse volumique égale à environ 0,90 ÷ 0,91 kg/dm³.

6. Film selon l'une quelconque des revendications précédentes, **caractérisé en ce que** le copolymère de poly(propylène) est un copolymère statistique ou séquencé consistant en des motifs répétés de monomères de propylène et d'éthylène et/ou de poly(butène).

7. Procédé de production d'un film à bulle d'air en poly(propylène), dans lequel le film à bulle d'air en poly(propylène) prévoit deux composants de film, le premier composant de film étant thermoformé avec des impressions cylindriques ou coniques, le second composant de film étant plat et soudé par fermeture au premier composant de film, chacun des composants de film étant une structure multicouche, produite lors d'une coextrusion tricouche, la structure coextrudée tricouche consistant en une couche interne d'homopolymère de PP et deux couches externes de copolymère de PP selon l'une quelconque des revendications 1 à 6, qui comprend les phases suivantes consistant à :
a) verser un premier composant de film en poly(propylène) ou film de thermoformage directement sur le cylindre formé sous vide ;
b) thermoformer le film de thermoformage avec des impressions cylindriques ou coniques ;
d) souder un second composant de film à fermeture sous-jacent en poly(propylène) sur le premier composant.

8. Procédé selon la revendication 7, **caractérisé en ce qu'**il prévoit la variation de la position de soudage du film à fermeture sous-jacent par rapport au niveau d'activité et au poids de base (angle de régulation), à savoir un point de soudage bas pour des niveaux élevés ou de grandes épaisseurs du produit et un produit de soudage élevé pour des niveaux bas ou de petites épaisseurs du produit.

9. Procédé selon la revendication 7, **caractérisé en ce que** le cylindre de formage est thermiquement régulé.

10. Utilisation du film selon l'une quelconque des revendications 1 à 6 en tant qu'élément protecteur ou élément d'emballage.
